# FASCICULE DE BREVET EUROPEEN

(11) **EP 1 467 104 B1**
(45) Date de publication et mention de la délivrance du brevet: **14.06.2006**
(21) Numéro de dépôt: 04290915.0
(22) Date de dépôt: 06.04.2004
(51) Int. Cl.: F04D 29/58, F04D 25/06

(54) **Groupe moto-compresseur centrifuge à réfrigération assistée**
Verdichtereinheit mit unterstützter Kühlung
Compressor unit with assisted cooling

(30) Priorité: 11.04.2003 FR 0304557
(43) Date de publication de la demande: 13.10.2004
(73) Titulaire: Thermodyn, 92084 Paris-La-Defense Cedex (FR)
(72) Inventeur: Pugnet, Jean-Marc, 71200 Le Creusot (FR); Bonnefoi, Patrice, 69130 Ecully (FR); Laboube, Pierre, 71200 Saint-Sernin-du-Bois (FR); Friez, Patrick, 71200 Le Creusot (FR)
(74) Mandataire: Casalonga, Axel

(56) Documents cités:
- EP-A- 1 069 313
- WO-A-02/099286
- US-A- 3 218 825
- US-A- 5 363 674

## Description

L'invention concerne un groupe compresseur centrifuge.

Plus particulièrement, l'invention concerne un groupe compresseur centrifuge de type intégré, c'est-à-dire dans lequel le compresseur et un moyen moteur d'entraînement du compresseur sont montés dans un carter commun étanche au gaz manipulé par le compresseur.

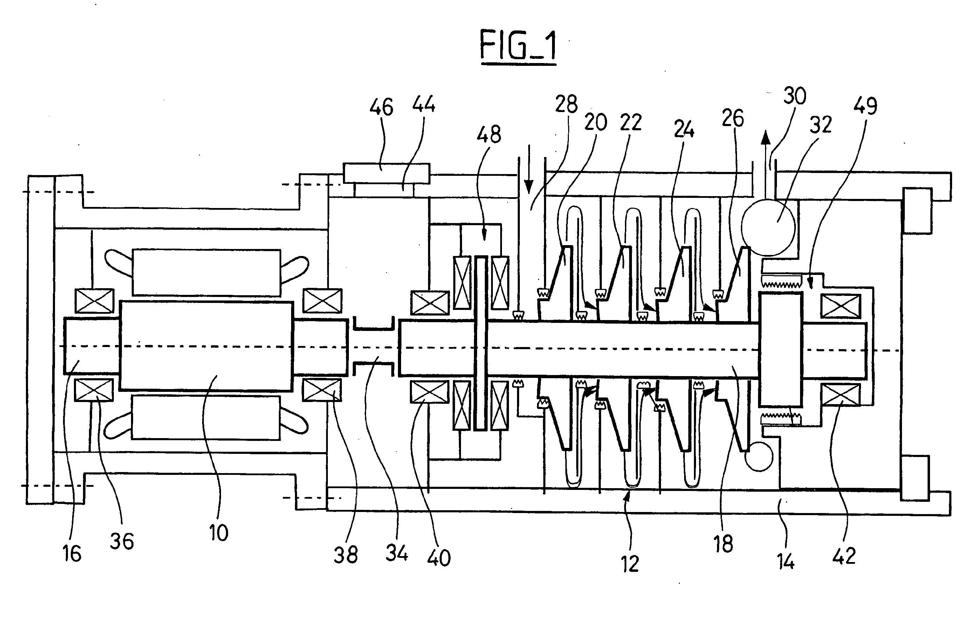

En se référant à la figure 1, un groupe compresseur intégré conventionnel comporte un moyen moteur, constitué généralement par un moteur d'entraînement électrique, désigné par la référence numérique générale 10 et un compresseur centrifuge 12 comportant par exemple plusieurs étages de compression, l'ensemble étant monté dans un carter commun étanche au gaz manipulé par le compresseur.

Comme on le voit sur cette figure 1, le moteur 10 entraîne en rotation un rotor 16 entraînant lui-même en rotation un arbre mené 18 supportant un ensemble de roues à aubes de compression 20, 22, 24 et 26.

Dans l'exemple de groupe compresseur illustré à la figure 1, le compresseur comporte quatre étages de compression qui assurent conjointement la compression d'un gaz aspiré par une conduite d'amené 28 pour le délivrer en sortie 30 en passant par une volute 32.

Le rotor 16 et l'arbre mené 18 sont reliés par l'intermédiaire d'un accouplement flexible 34. Dans ce cas, le rotor 16 et l'arbre mené 18 sont chacun supportés par des paliers radiaux 36, 38, 40 et 42. Une ouverture 44 ménagée dans le carter 14 et obturée par un moyen d'obturation 46 permet l'accès à l'accouplement flexible 34 pour le montage du compresseur.

On voit enfin sur la figure 1 qu'une butée axiale 48 limite le déplacement axial de l'arbre mené 18, tandis qu'un piston d'équilibrage 49 permet d'équilibrer la pression axiale appliquée sur l'arbre mené au cours du fonctionnement du groupe compresseur.

La réalisation d'un groupe compresseur sous la forme d'un moteur et d'un compresseur disposés dans un carter commun étanche sous pression permet d'éliminer les garnitures d'étanchéité du compresseur, qui sont des éléments susceptibles de compromettre la fiabilité du groupe compresseur et d'être la source d'effluents gazeux dans l'atmosphère. Dans ce cas, le moteur est disposé au sein même du gaz manipulé par le compresseur. Afin d'éviter un accroissement trop important des pertes mécaniques du moteur par ventilation, le moteur est agencé de sorte qu'il se situe à la pression d'aspiration du compresseur. Il est ainsi nécessaire de prévoir une circulation du gaz dans le moteur afin d'évacuer les pertes, c'est-à-dire dans le stator pour évacuer les pertes par effet joule dans les bobinages, et dans l'entrefer entre le rotor et le stator pour évacuer les pertes par ventilation et les pertes par courant de Foucault dans le rotor.

C'est pourquoi, les groupes compresseurs centrifuges sont généralement dotés de moyens de refroidissement du moyen moteur et des paliers de guidage par prélèvement de gaz en sortie du premier étage de compression pour procéder au refroidissement du moteur et des paliers. On pourra à cet égard se référer aux documents EP-A-1 069 313 et US 6,390,789, qui décrivent différents types de groupes moto-compresseur dans lesquels le moteur et les paliers sont refroidis par prélèvement de gaz de refroidissement en sortie du premier étage de compression.

Cependant, ce type de technique de refroidissement présente un certain nombre d'inconvénients majeurs, notamment en raison du fait qu'elle ne permet pas un refroidissement optimal du moteur et des paliers.

En effet, la pression différentielle engendrée par la roue du premier étage de compression peut être de l'ordre de 15 bars pour un compresseur de gaz naturel et de pression d'aspiration de 50 bars, alors que la perte de charge créée lors de la circulation du gaz de refroidissement dans les différents éléments du groupe compresseur n'est que d'environ 1 à 2 bars. Dans ces conditions, on dépense environ 10 fois plus d'énergie que nécessaire pour engendrer le flux de gaz de refroidissement, et l'élévation de température du gaz due à l'accroissement de pression dans le premier étage de compression est également 10 fois plus grande que nécessaire. On pénalise donc le rendement du groupe moto-compresseur et l'on réduit l'efficacité de la réfrigération.

Le but de l'invention est de pallier cet inconvénient et de fournir un groupe moto-compresseur présentant des moyens de refroidissement améliorés, et, en particulier, pourvu de moyens d'assistance à la réfrigération.

L'invention a donc pour objet un groupe compresseur centrifuge, du type comprenant un moyen moteur entraînant en rotation un rotor et au moins un compresseur comprenant un corps statorique et un ensemble de roues à aube montées sur un arbre mené entraîné en rotation par le rotor dans le corps statorique, l'ensemble constitué par le moteur et le ou chaque compresseur étant monté dans un carter commun étanche au gaz manipulé par le groupe compresseur, le groupe compresseur comportant en outre un ensemble de paliers actifs de guidage axial et radial du rotor et de l'arbre mené et des moyens de refroidissement du moyen moteur et des paliers de guidage.

Selon une caractéristique générale de ce groupe compresseur centrifuge, les moyens de refroidissement comportent des moyens de prélèvement de gaz en amont du compresseur, un ensemble de conduits d'alimentation des paliers et du moyen moteur en gaz prélevé, dans lequel débouchent les moyens de prélèvement de gaz, et un circulateur adapté pour entraîner le gaz dans les conduits.

Selon un mode de réalisation, le circulateur est un compresseur additionnel indépendant entraîné par un moteur séparé.

En variante, le circulateur est un compresseur additionnel entraîné en rotation par le rotor du moyen moteur. Dans ce cas, le compresseur additionnel peut être monté sur le rotor du moteur ou sur l'arbre mené.

De préférence, on prévoit d'associer au circulateur des moyens de filtration du gaz prélevé.

Selon une autre caractéristique de l'invention, les moyens de refroidissement comportent un ensemble de conduits internes et un ensemble de canalisations externes recueillant le gaz en amont du premier étage de compression et alimentant les conduits internes en parallèle.

Par exemple, le circulateur est monté extérieurement en série sur les canalisations externes. Il peut également être monté intérieurement en série sur les conduits internes.

Selon un mode de réalisation du groupe compresseur selon l'invention, le rotor et l'arbre mené sont reliés par un moyen d'accouplement disposé dans une cavité accessible de l'extérieur du compresseur, le circulateur étant monté dans ladite cavité.

Selon une autre caractéristique de l'invention, le flux de gaz de refroidissement dans le moyen moteur et le flux de gaz de refroidissement dans les paliers constituent des flux distincts qui convergent en amont du premier étage de compression.

Par exemple, les conduits internes d'alimentation du moyen moteur sont alimentés en parallèle des conduits internes d'alimentation du palier en gaz de refroidissement.

Selon encore une autre caractéristique de l'invention, l'arbre mené du compresseur étant supporté par deux paliers radiaux d'extrémité, les moyens de refroidissement comportent un conduit axial s'étendant d'un palier à l'autre et alimenté à l'une de ses extrémités par les canalisations externes, ledit conduit axial s'étendant globalement longitudinalement de manière radialement externe dans le compresseur.

Par exemple, les conduits internes d'alimentation des paliers comportent un ensemble de conduits orientés de manière radialement externe dans le compresseur et alimentant chacun un palier.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1, dont il a déjà été fait mention, illustre la structure générale d'un groupe moto-compresseur intégré conventionnel ;
- la figure 2 est un schéma synoptique d'un groupe compresseur centrifuge conforme à l'invention ;
- la figure 3 illustre un mode de réalisation d'un groupe compresseur centrifuge conforme à l'invention ;
- la figure 4 illustre un mode de réalisation d'un groupe compresseur réalisé conformément à l'enseignement de l'invention ;
- la figure 5 illustre un autre mode de réalisation d'un groupe compresseur réalisé conformément à l'enseignement de l'invention ; et
- la figure 6 illustre encore un autre exemple de réalisation d'un groupe compresseur réalisé conformément à l'enseignement de l'invention.

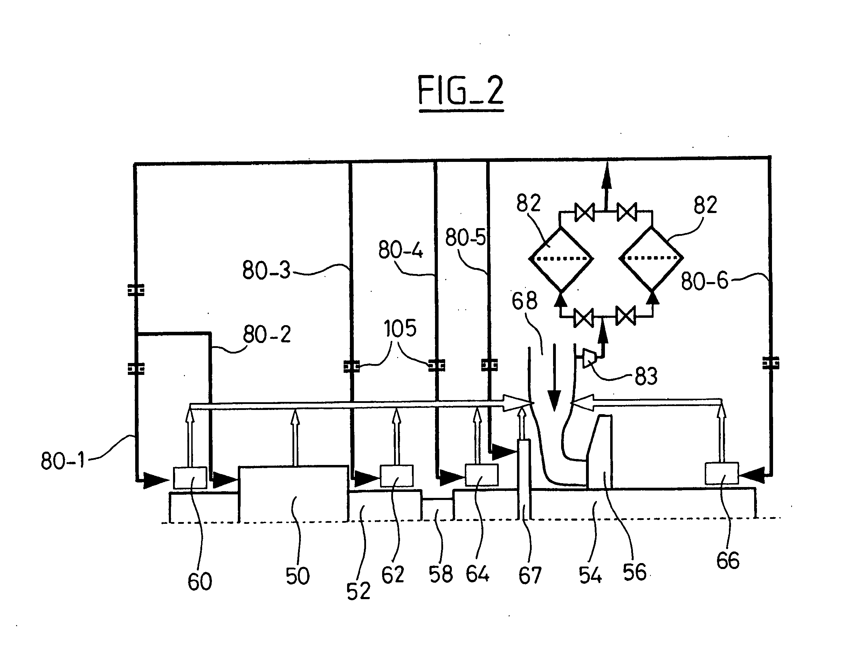

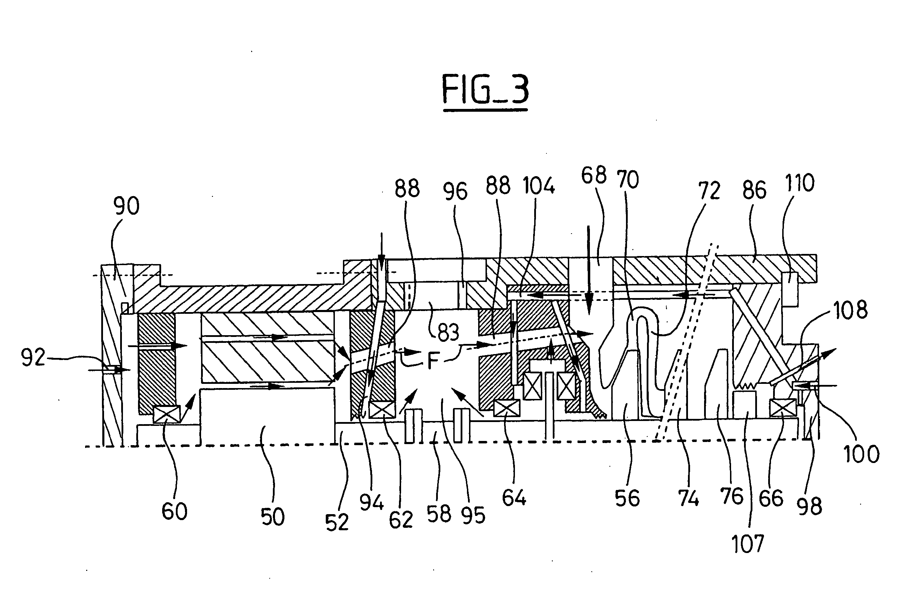

En référence à la figure 2, on va maintenant décrire le principe général de réalisation d'un groupe compresseur conforme à l'invention. Sur cette figure 2, seul un étage de compression a été représenté par soucis de clarté, les autres étages de compression n'ayant pas été représentés. On conçoit cependant qu'il peut être pourvu d'un nombre quelconque d'étages de compression, comme cela sera mentionné par la suite en référence aux figures 3 à 6.

Le groupe compresseur illustré sur cette figure 2 comporte un moyen moteur 50, constitué par exemple par un moteur électrique à grande vitesse variable entraînant en rotation un rotor 52, entraînant lui-même à vitesse identique un arbre mené 54 sur lequel est montée une roue à aubes 56. Le rotor 52 et l'arbre mené 54 sont reliés par un accouplement flexible 58. Dès lors, le rotor 52 et l'arbre mené 54 sont chacun supportés par deux paliers radiaux d'extrémité, respectivement 60, 62 et 64, 66. Une butée 67 limite le déplacement axial du rotor 54 lors du fonctionnement du compresseur engendré par l'apparition d'efforts axiaux dus à l'apparition d'une pression différentielle de part et d'autre de la roue à aubes 56.

La roue à aubes 56 aspire un gaz comprimé délivré à partir d'une conduite d'amené 68 pour provoquer un accroissement de sa pression statique ainsi qu'une augmentation de son énergie cinétique. Un diffuseur 70 (figure 3) ralentit le gaz issu de la roue à aubes 56 pour accroître sa pression. En aval, un canal de retour 72 conduit le gaz vers des étages de compression 74, ...76 disposés en aval.

Comme on le voit sur les figures 2 et 3, afin de refroidir le moteur 50 ainsi que les paliers 60, 62, 64 et 66 et la butée 67 de limitation du déplacement axial du rotor 50, une partie du gaz en amont du premier étage 56 de compression est prélevée et est utilisée en tant que gaz de refroidissement. Ce gaz de refroidissement est directement prélevé à partir de la conduite d'amenée 68.

Les différents éléments du groupe compresseur à refroidir, à savoir le moteur, les paliers et la butée sont refroidis en utilisant des flux de gaz de refroidissement distincts, c'est-à-dire en parallèle, délivrés par des conduits 80-1, 80-2,..., 80-6 faisant partie d'un ensemble de canalisations externes recueillant le gaz en amont du premier étage de compression 56, après passage à travers un ensemble de cartouches de filtrage, telles que 82, optionnelles. Comme on le conçoit, cet agencement, selon lequel le moteur, d'une part, et les paliers, d'autre part, sont alimentés en parallèle selon des flux de refroidissement distincts, permet de s'affranchir des contraintes liées à la taille de l'entrefer des paliers magnétiques, d'une part, et du moteur, d'autre part.

Pour forcer le gaz de refroidissement prélevé à partir de la conduite d'amenée 68 à travers les conduites externes 80-1, ..., 80-6, un circulateur 83 est placé sur le trajet du gaz de refroidissement. Par exemple, comme dans l'exemple de réalisation représenté, le circulateur est placé entre la conduite d'amenée 68 et les cartouches de filtrage 82.

Comme cela sera davantage décrit par la suite, ce circulateur peut être constitué par un compresseur additionnel indépendant entraîné par moteur séparé. Dans ce cas, par exemple, un tel compresseur additionnel peut être monté en porte-à-faux sur un bout d'arbre d'un moteur séparé qui sera lui-même directement disposé, par exemple, dans l'enveloppe du compresseur. Un tel compresseur peut être constitué par un compresseur de type ventilateur axial. Cependant, d'autres types de compresseurs peuvent également être utilisés. On notera cependant que la capacité de ce compresseur doit être suffisante pour compenser la perte de charge créée par la circulation du gaz de refroidissement dans le groupe compresseur.

On notera également que, en variante, le compresseur peut être installé directement sur le rotor 52 du moteur ou, en variante, sur l'arbre mené 54 du compresseur principal.

En se référant à la figure 3, selon un exemple de réalisation, pour le refroidissement proprement dit du moteur et des paliers, le groupe motocompresseur comporte un ensemble de conduits internes d'alimentation alimentés respectivement à partir des conduites externes 80-1,..., 80-6. Après passage à travers le moteur et les paliers, le gaz de refroidissement est recueilli par un canal central 88 globalement longitudinal, lequel débouche dans la conduite d'amené 68, en amont du premier étage de compression 56.

Pour le refroidissement du moteur 50 et des paliers d'extrémité 60 et 62 supportant le rotor 52, le couvercle d'extrémité 90 correspondant enfermant l'enveloppe 86 est pourvu d'un orifice 92, lequel communique avec la conduite externe 80-1 correspondante. Une partie de ce flux de refroidissement est utilisé pour le refroidissement du palier 60. Ce flux est ensuite récupéré pour le refroidissement du moteur, par passage à travers l'entrefer du moteur. Une autre partie de ce flux est directement utilisé pour le refroidissement du moteur.

Un deuxième conduit interne 94 est alimenté à partir des canalisations externes pour le refroidissement du deuxième palier 62 du moteur.

En aval, le flux de gaz de refroidissement servant au refroidissement des paliers 60 et 62 et du moteur 50, est récupéré dans une cavité 95 dans laquelle est disposé l'accouplement flexible 58 et qui est obturé par un moyen d'obturation étanche 96.

En aval, comme représenté par les flèches F, le gaz est récupéré par le conduit interne 88 pour être réinjecté en amont du premier étage de compression 56.

Par ailleurs, les paliers et la butée 67 sont refroidis à partir d'un flux de gaz de refroidissement délivré à travers un couvercle d'extrémité 98 obturant l'extrémité correspondante de l'enveloppe 86. On voit en effet sur cette figure que ce couvercle 98 est pourvu d'un orifice 100, lequel communique avec une conduite externe 80-6 correspondante. Ce flux de gaz de refroidissement refroidit, d'une part, le palier d'extrémité 66 situé du côté de ce couvercle 98 et le palier d'extrémité opposé 64, par l'intermédiaire d'une conduite axiale 104, qui s'étend longitudinalement de façon radialement externe entre ces paliers 64 et 66, à travers les éléments de stator du compresseur. Cette conduite axiale est également conformée de manière à refroidir également la butée 78. Le flux de gaz est alors réinjecté dans le conduit 88.

Comme on le voit sur la figure 3, et comme indiqué précédemment, le rotor 52 et l'arbre mené 54 sont raccordés par un accouplement flexible 58 accessible de l'extérieur par l'intermédiaire d'une trappe d'accès qui permet d'accéder à la cavité 95, et qui est obturée par un bouchon d'obturation 96.

Dans le cas où l'on utilise un circulateur 83 constitué par un compresseur additionnel indépendant entraîné par un moteur séparé, ce circulateur peut être directement installé à l'emplacement du bouchon d'obturation 96. Dans ce cas, le piquage du gaz de refroidissement à partir de la conduite d'amenée 68 s'effectue au moyen de la conduite axiale 104.

On notera que le soutirage du gaz de refroidissement en amont du premier étage de compression permet de prélever un gaz moins chaud que s'il avait été pris en sortie du premier étage de compression ou au niveau de la sortie du compresseur, rendant la réfrigération plus efficace.

L'utilisation d'un circulateur 83 pour engendrer le flux de gaz de refroidissement permet d'éviter toute accroissement non nécessaire de la pression du gaz de refroidissement.

En outre, l'utilisation d'un circulateur indépendant permet, pendant les phases de maintenance de la machine, de sustenter les rotor et arbre mené sur leurs paliers respectifs tout en bénéficiant d'une source de réfrigération ne limitant en aucune façon le temps de l'opération.

On notera également que, pendant des phases de maintenance au cours desquelles une zone extérieure de la machine peut comporter du gaz naturel, le circulateur permet de créer une surpression interne au moteur et au palier, leur conférant une anti-déflagrance pour un travail sans risque, et ceci sans nécessiter de source extérieure de gaz non explosible pressurisé.

Lors d'un redémarrage du groupe, le circulateur permet également, au cours de phases d'inertage et de chargement en gaz naturel, de faire circuler le fluide d'inertage dans tout le groupe compresseur, et donc de réduire les risques de constituer un mélange explosible dans un bras mort dans lequel pourrait subsister de l'air résiduel.

Le prélèvement du gaz de refroidissement directement à partir de la conduite d'amenée permet une grande souplesse de dimensionnement aérodynamique de la roue du circulateur, par rapport à l'état de la technique, dans lequel on prélève le gaz de refroidissement en sortie du premier étage de compression.

Par ailleurs, dans le cas où on utilise un circulateur intégré au rotor principal du groupe compresseur, il est possible d'augmenter la fiabilité du circulateur grâce à un entraînement direct de ce circulateur, dans la mesure où l'on n'utilise aucun dispositif d'entraînement additionnel ni source de puissance.

Dans ce mode de réalisation, il est possible d'adapter naturellement le débit de réfrigération aux conditions de fonctionnement de la machine. En effet, si la vitesse diminue, les pertes par ventilation diminuent et le débit comprimé diminue également.

De plus, ce prélèvement présente une source d'alimentation autonome dès que le moteur est mis en route, des moyens 105 de réglage de débit de réfrigération pour le moteur, d'une part, et pour chacun des paliers, d'autre part, étant prévus pour créer des pertes de charge adéquates et contrôlées dans les canalisations externes. Ces moyens de réglage peuvent être actifs, de type vanne régulatrice, ou passifs, de type orifice fixe.

On notera que dans l'exemple de réalisation illustré à la figure 3, l'aspiration du gaz dans le compresseur est disposée du côté du moteur électrique. Le principe de refroidissement décrit précédemment peut également s'appliquer à un agencement dans lequel le refoulement du compresseur est disposé du côté du moteur. Dans ce cas, c'est le flux de gaz de réfrigération issu du moteur ou, de manière générale, d'organes situés du côté du piston d'équilibrage 107 qui est mélangé avec le flux de gaz issu de ce piston d'équilibrage 107 pour être ensuite injecté dans la conduite d'amené 68 par une canalisation d'équilibrage 108.

Pour la maintenance, le moyen d'obturation étanche 96 permet l'accès à l'accouplement flexible 58. L'extraction du rotor du moteur se fait, quant à elle, en démontant le couvercle d'extrémité 90, lequel est par exemple boulonné sur l'enveloppe. Le démontage de la partie interne du compresseur est, quant à lui, réalisé en extrayant le couvercle 98 correspondant, lequel est par exemple fixé sur l'enveloppe par un anneau de cisaillement 110. De préférence, l'ensemble est agencé de manière que l'assemblage rotor-diaphragmes, c'est-à-dire l'ensemble du compresseur, puisse être retiré de l'enveloppe en même temps que le couvercle 98 sans avoir à désolidariser l'enveloppe de son socle et des tuyauteries de gaz de procédé et des canalisations de refroidissement. On notera que, pendant ces phases de montage-démontage, les rotors reposent sur leur palier, ce qui facilite les opérations d'accouplement-désaccouplement, sans risque d'endommagement des pièces tournantes et des pièces statoriques qui pourraient sinon entrer en contact avec les rotors au cours de ces opérations.

On notera enfin que l'invention n'est pas limitée aux modes de réalisation décrits.

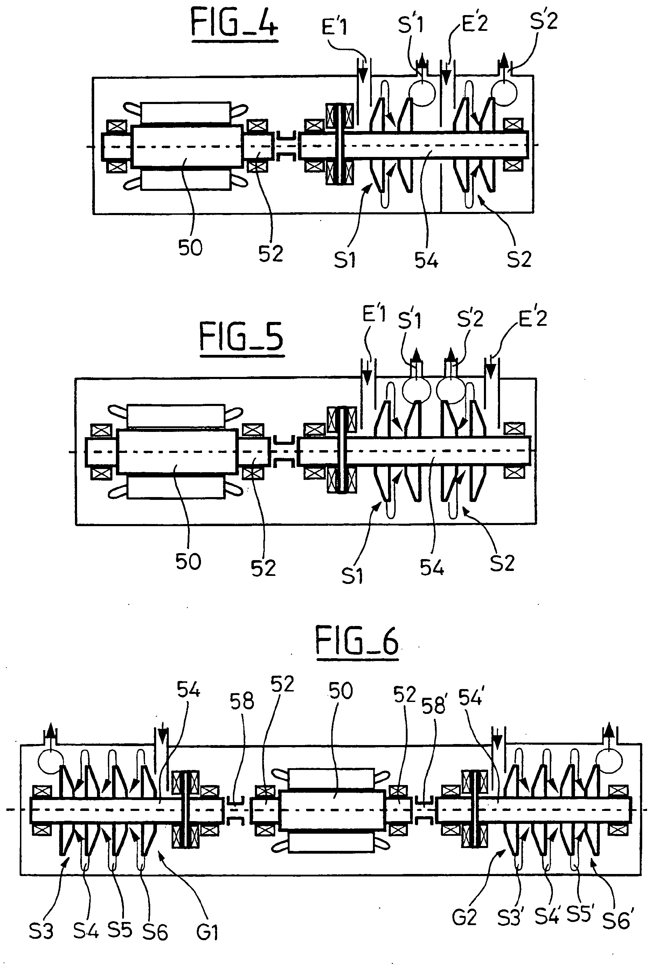

En effet, alors que sur les figures 2 et 3 on a représenté un groupe compresseur centrifuge muni d'un compresseur multiétagé intégré en ligne à une seule section de compression à plusieurs étages, l'invention s'applique également à d'autres types de groupes compresseurs, par exemple à deux sections S1 et S2 en ligne, par exemple à deux étages chacune, assurant chacune la compression d'un gaz de procédé, comme représenté sur les figures 4 et 5.

Dans ce cas, dans un exemple de réalisation représenté sur la figure 4, on prévoit, dans l'enveloppe, deux entrées E'1 et E'2 et deux sorties S'1 et S'2 de sorte que l'entrée E'2 de la deuxième section se situe au voisinage de la sortie S'1 de la première section. Ainsi, dans ce cas, comme visible sur la figure 4, le premier étage de compression de l'une des sections S2 est disposé en regard du deuxième étage de compression de l'autre section S1.

Au contraire, comme visible sur la figure 5, pour une configuration connue sous l'appellation "Back to Back", les premiers étages de compression de chacune des sections S1 et S2 peuvent être disposés côte à côte. Dans ce cas, les sorties S'1 et S'2 de ces étages de compression sont disposées côte à côte, et les entrées E'1 et E'2 sont disposées à l'opposé l'une de l'autre.

On notera enfin, comme visible sur la figure 6, que l'invention s'applique également à un agencement dans lequel on utilise, disposés dans une enveloppe commune, un moteur 50 et deux groupes compresseurs G1 et G2 pourvus chacun d'étages respectifs de compression S3, S4, S5 et S6, et S'3, S'4, S'5 et S'6 montés chacun sur un arbre mené 54 et 54', respectivement, ces arbres étant fixés à deux extrémités mutuellement opposées du rotor 52 en utilisant des accouplements flexibles 58 et 58'.

Bien entendu, cet agencement à deux groupes de compression peut utiliser l'un ou l'autre des agencements décrits précédemment en référence aux figures 4 et 5.

Dans ces différents modes de réalisation, on utilise des moyens de refroidissement du moteur et des paliers utilisant des flux de gaz de refroidissement en parallèle.

On notera enfin qu'il est possible d'installer, comme indiqué précédemment, le circulateur en bout du rotor du moteur. Dans ce cas, l'arrivée du piquage depuis la conduite d'amenée 68 se fait au niveau de l'extrémité du moteur car celui-ci est le plus gros consommateur en débit de réfrigération.

L'invention qui vient d'être décrite, qui utilise un circulateur indépendant pour engendrer un flux de gaz de refroidissement du moteur et des paliers d'un groupe compresseur centrifuge présente, outre les avantages indiqués précédemment, les avantages suivants :
- pas de nécessité d'un fluide de réfrigération séparé ;
- minimisation de l'énergie comprimée pour créer la circulation du fluide de réfrigération, et maximisation de l'efficacité de la réfrigération par diminution de la température d'entrée ;
- minimisation de la taille de la machine et simplification de l'installation ;
- pas de fuite de gaz vers l'extérieur (protection de l'environnement) ;
- amélioration de la fiabilité en raison, d'une part, d'une réfrigération des paliers pendant les phases de maintenance avec création d'une surpression interne permettant d'éviter tout risque d'explosion, et, d'autre part, d'une minimisation des tuyauteries extérieures de réfrigération et d'un gain de temps de démontage-remontage ;
- possibilité de filtrage du gaz de réfrigération ;
- amélioration de la fiabilité liée à l'arrangement de la machine, due à l'élimination des garnitures d'étanchéité et de leurs systèmes d'auxiliaires de surveillance, due au montage et démontage facilités des différents éléments de la machine, grâce à l'utilisation de deux paliers par rotor, due à une facilité d'alignement du rotor et de l'arbre mené, et due à la possibilité de réaliser un équilibrage dynamique *in situ* grâce aux deux plans d'équilibrage accessibles de chaque côté de l'accouplement.

## Revendications

1. Groupe compresseur centrifuge, du type comprenant un moyen moteur (50) entraînant en rotation un rotor (52) et au moins un compresseur comprenant un corps statorique et ensemble de roues à aubes (56) montées sur un arbre mené entraîné en rotation par le rotor dans le corps statorique, l'ensemble constitué par le moteur et le ou chaque compresseur étant monté dans un carter (86) commun étanche au gaz manipulé par le groupe compresseur, le groupe compresseur comportant en outre un ensemble de paliers actifs (60, 62, 64, 66, 67) de guidage axial et radial du rotor et de l'arbre mené et des moyens de refroidissement du moyen moteur et des paliers de guidage, **caractérisé en ce que** les moyens de refroidissement comportent des moyens de prélèvement de gaz en amont du compresseur, un ensemble de conduits (80-1,..., 80-6, 88, 92, 94, 104) d'alimentation des paliers et du moyen moteur en gaz prélevé, dans lesquels débouchent les moyens de prélèvement de gaz, et un circulateur (83) adapté pour entraîner le gaz dans les conduits.

2. Groupe compresseur centrifuge selon la revendication 1, **caractérisé en ce que** le circulateur (83) est un compresseur additionnel indépendant entraîné par un moteur séparé.

3. Groupe compresseur centrifuge selon la revendication 1, **caractérisé en ce que** le circulateur (83) est un compresseur additionnel entraîné en rotation par le rotor du moyen moteur.

4. Groupe compresseur centrifuge selon la revendication 3, **caractérisé en ce que** le compresseur (83) additionnel est monté sur le rotor (52) du moteur.

5. Groupe compresseur centrifuge selon la revendication 3, **caractérisé en ce que** le compresseur (83) additionnel est monté sur l'arbre mené (54).

6. Groupe compresseur centrifuge selon l'une quelconque des revendications 1 à 5, **caractérisé en ce que** le circulateur est pourvu de moyens de filtration du gaz prélevé.

7. Groupe compresseur centrifuge selon l'une quelconque des revendications 1 à 6, **caractérisé en ce que** les moyens de refroidissement comportent un ensemble de conduits internes (88, 92, 94, 104) et un ensemble de canalisations externes (80-1, 80-2, 80-3, 80-4, 80-5, 80-6) recueillant le gaz en amont du premier étage de compression et alimentant les conduits internes en parallèle.

8. Groupe compresseur centrifuge selon la revendication 7, **caractérisé en ce que** le circulateur est monté extérieurement en série sur les canalisations externes.

9. Groupe compresseur centrifuge selon la revendication 7, **caractérisé en ce que** le circulateur est monté intérieurement en série sur les conduits internes.

10. Groupe compresseur selon la revendication 9, **caractérisé en ce que** le rotor (52) et l'arbre mené (54) sont reliés par un moyen d'accouplement (58) disposé dans une cavité accessible de l'extérieure du groupe compresseur, et **en ce que** le circulateur est monté dans ladite cavité (95).

11. Groupe compresseur centrifuge selon l'une quelconque des revendications 1 à 10, **caractérisé en ce que** le flux de gaz de refroidissement dans le moyen moteur (50) et le flux du flux de gaz de refroidissement dans les paliers (60, 62, 64, 66, 67) constituent des flux distincts qui convergent en amont du premier étage de compression.

12. Groupe compresseur centrifuge selon la revendication 11, dépendante de la revendication 7, **caractérisé en ce que** les conduits internes (80-1, 80-2) d'alimentation du moyen moteur sont alimentés en parallèle des conduits internes (80-3, 80-4, 80-5, 80-6) d'alimentation des paliers en gaz de refroidissement.

13. Groupe compresseur centrifuge selon l'une quelconque des revendications 7 à 12, **caractérisé en ce que** l'arbre mené du compresseur étant supporté par deux paliers radiaux (64, 66) d'extrémité, les moyens de refroidissement comportent un conduit axial (104) s'étendant d'un palier à l'autre et alimenté à l'une de ses extrémités par les canalisations externes, ledit conduit axial s'étendant globalement longitudinalement de manière radialement externe dans le compresseur.

14. Groupe compresseur centrifuge selon l'une quelconque des revendications 7 à 13, **caractérisé en ce que** les conduits internes d'alimentation des paliers comportent un ensemble de conduits orientés (94) de manière radialement externe dans le compresseur et alimentant chacun un palier.

## Claims

1. Centrifugal compressor unit, of the type comprising a motor means (50) which rotates a rotor (52) and at least one compressor comprising a stator housing and a set of impellers (56) mounted on a driven shaft which is rotated by the rotor in the stator housing, the assembly consisting of the motor and the compressor or each of the compressors being mounted in a common casing (86) sealed with respect to the gas handled by the compressor unit, the compressor unit also comprising a set of active bearings (60, 62, 64, 66, 67) for the axial and radial guidance of the rotor and of the driven shaft and means of cooling the motor means and the guide bearings, **characterized in that** the cooling means include means for collecting gas upstream of the compressor, a set of passages (80-1, ..., 80-6, 88, 92,94, 104) for supplying the bearings and the motor means with the collected gas, into which the gas collection means open, and a circulator (83) adapted to impel the gas in the passages.

2. Centrifugal compressor unit according to Claim 1, **characterized in that** the circulator (83) is an independent additional compressor driven by a separate motor.

3. Centrifugal compressor unit according to Claim 1, **characterized in that** the circulator (83) is an additional compressor rotated by the rotor of the motor means.

4. Centrifugal compressor unit according to Claim 3, **characterized in that** the additional compressor (83) is mounted on the rotor (52) of the motor.

5. Centrifugal compressor unit according to Claim 3, **characterized in that** the additional compressor (83) is mounted on the driven shaft (54).

6. Centrifugal compressor unit according to any one of Claims 1 to 5, **characterized in that** the circulator is provided with means for filtering the collected gas.

7. Centrifugal compressor unit according to any one of Claims 1 to 6, **characterized in that** the cooling means comprise a set of internal passages (88, 92, 94, 104) and a set of external pipes (80-1, 80-2, 80-3, 80-4, 80-5, 80-6) which collect the gas upstream of the first compression stage and supply the internal passages in parallel.

8. Centrifugal compressor unit according to Claim 7, **characterized in that** the circulator is mounted externally in series on the external pipes.

9. Centrifugal compressor unit according to Claim 7, **characterized in that** the circulator is mounted internally in series on the internal passages.

10. Compressor unit according to Claim 9, **characterized in that** the rotor (52) and the driven shaft (54) are connected by a coupling means (58) positioned in a cavity accessible from the outside of the compressor unit, and **in that** the circulator is mounted in the said cavity (95).

11. Centrifugal compressor unit according to any one of Claims 1 to 10, **characterized in that** the cooling gas flow in the motor means (50) and the cooling gas flow in the bearings (60, 62, 64, 66, 67) form separate flows which converge upstream of the first compression stage.

12. Centrifugal compressor unit according to Claim 11, dependent on Claim 7, **characterized in that** the internal passages (80-1, 80-2) for supplying the motor means are supplied in parallel with the internal passages (80-3, 80-4, 80-5, 80-6) for supplying the bearings with cooling gas.

13. Centrifugal compressor unit according to any one of Claims 7 to 12, **characterized in that**, since the driven shaft of the compressor is supported by two radial end bearings (64, 66), the cooling means include an axial passage (104) extending from one bearing to the other and supplied at one of its ends by the external pipes, the said axial passage extending longitudinally overall in a radially external way in the compressor.

14. Centrifugal compressor unit according to any one of Claims 7 to 13, **characterized in that** the internal passages for supplying the bearings include a set of passages (94) orientated in a radially external way in the compressor and each supplying one bearing.

## Patentansprüche

1. Zentrifugalverdichter von der Art mit einem einen Rotor (52) in Drehung versetzenden Antriebsmittel (50) und mit mindestens einem Verdichter, der einen Statorkörper und eine Einheit von Schaufelrädern (56) aufweist, die auf eine Abtriebswelle montiert sind, die vom Rotor im Statorkörper in Drehung versetzt wird, wobei die aus dem Motor und dem oder jedem Verdichter gebildete Einheit in ein gemeinsames Gehäuse (86) montiert ist bzw. sind, das gegenüber dem vom Verdichter behandelten Gas dicht ist, wobei der Verdichter außerdem eine Einheit von aktiven Lagern (60, 62, 64, 66, 67) zur axialen und radialen Führung des Rotors und der Abtriebswelle und Kühlmittel für das Antriebsmittel und die Führungslager aufweist, **dadurch gekennzeichnet, dass** die Kühlmittel Gasentnahmemittel vor dem Verdichter, eine Einheit von Kanälen (80-1, ... , 80-6, 88, 92, 94, 104) zur Speisung der Lager und des Antriebsmittels mit entnommenem Gas, in die die Gasentnahmemittel münden, und einen Zirkulator (83) aufweisen, der ausgelegt ist, um das Gas in die Kanäle zu treiben.

2. Zentrifugalverdichter nach Anspruch 1, **dadurch gekennzeichnet, dass** der Zirkulator (83) ein zusätzlicher unabhängiger Verdichter ist, der von einem getrennten Motor angetrieben wird.

3. Zentrifugalverdichter nach Anspruch 1, **dadurch gekennzeichnet, dass** der Zirkulator (83) ein zusätzlicher Verdichter ist, der vom Rotor des Antriebsmittels in Drehung versetzt wird.

4. Zentrifugalverdichter nach Anspruch 3, **dadurch gekennzeichnet, dass** der zusätzliche Verdichter (83) auf den Rotor (52) des Motors montiert ist.

5. Zentrifugalverdichter nach Anspruch 3, **dadurch gekennzeichnet, dass** der zusätzliche Verdichter (83) auf die Abtriebswelle (54) montiert ist.

6. Zentrifugalverdichter nach einem der Ansprüche 1 bis 5, **dadurch gekennzeichnet, dass** der Zirkulator mit Mitteln zum Filtern des entnommenen Gases versehen ist.

7. Zentrifugalverdichter nach einem der Ansprüche 1 bis 6, **dadurch gekennzeichnet, dass** die Kühlmittel eine Einheit von inneren Kanälen (88, 92, 94, 104) und eine Einheit von äußeren Rohrleitungen (80-1, 80-2, 80-3, 80-4, 80-5, 80-6) aufweisen, die das Gas stromaufwärts vor der ersten Verdichterstufe auffangen und die inneren Kanäle parallel speisen.

8. Zentrifugalverdichter nach Anspruch 7, **dadurch gekennzeichnet, dass** der Zirkulator außen in Reihe auf die äußeren Rohrleitungen montiert ist.

9. Zentrifugalverdichter nach Anspruch 7, **dadurch gekennzeichnet, dass** der Zirkulator innen in Reihe auf die inneren Kanäle montiert ist.

10. Zentrifugalverdichter nach Anspruch 9, **dadurch gekennzeichnet, dass** der Rotor (52) und die Abtriebswelle (54) über ein Koppelmittel (58) miteinander verbunden sind, das in einem von außerhalb des Verdichters zugänglichen Hohlraum angeordnet ist, und dass der Zirkulator in diesen Hohlraum (95) montiert ist.

11. Zentrifugalverdichter nach einem der Ansprüche 1 bis 10, **dadurch gekennzeichnet, dass** der Kühlgasstrom im Antriebsmittel (50) und der Kühlgasstrom in den Lagern (60, 62, 64, 66, 67) getrennte Ströme bilden, die vor der ersten Verdichtungsstufe konvergieren.

12. Zentrifugalverdichter nach Anspruch 11 in Abhängigkeit von Anspruch 7, **dadurch gekennzeichnet, dass** die inneren Kanäle (80-1, 80-2) zur Speisung des Antriebsmittels parallel zu den inneren Kanälen (80-3, 80-4, 80-5, 80-6) zur Speisung der Lager mit Kühlgas gespeist werden.

13. Zentrifugalverdichter nach einem der Ansprüche 7 bis 12, **dadurch gekennzeichnet, dass**, da die Abtriebswelle des Verdichters von zwei radialen Endlagern (64, 66) getragen wird, die Kühlmittel einen axialen Kanal (104) aufweisen, der sich von einem Lager zum anderen erstreckt und an seinen Enden von den äußeren Rohrleitungen gespeist wird, wobei der axiale Kanal sich global in Längsrichtung radial außen im Verdichter erstreckt.

14. Zentrifugalverdichter nach einem der Ansprüche 7 bis 13, **dadurch gekennzeichnet, dass** die inneren Speisekanäle der Lager eine Einheit von Kanälen (94) aufweisen, die im Verdichter radial außen ausgerichtet sind und je ein Lager speisen.
